# EUROPEAN PATENT APPLICATION

(11) **EP 4 831 145 A1**
(43) Date of publication of application: **28.10.2026**
(21) Application number: 24906899.0
(22) Date of filing: 21.10.2024
(51) Int. Cl.: C04B 35/488, A61C 13/083, C04B 35/622

(54) **SLURRY, MOLDED BODY, AND SINTERED BODY**

(30) Priority: 19.12.2023 JP 2023213435
(71) Applicant: GC MFG Corporation, Shizuoka 410-1307 (JP)
(72) Inventor: HOKII, Yusuke, Tokyo 174-8585 (JP); ABE, Yoshifumi, Tokyo 174-8585 (JP); ONODERA, Mizuho, Tokyo 174-8585 (JP)
(74) Representative: Müller-Boré & Partner Patentanwälte PartG mbB
(86) International application number: PCT/JP2024/037300
(87) International publication number: WO 2025/134511

(57) **Abstract**

There is provided a slurry that can be sintered at a low temperature in a short time to form a densified sintered body, and includes a zirconia powder, a glass powder, and a polymerizable monomer.

## Description

### TECHNICAL FIELD

The present disclosure relates to a slurry, a molded body, and a sintered body.

### BACKGROUND OF THE INVENTION

As sintering aids for zirconia powders, alumina, silica, aluminum silicate, transition metal oxides, and the like have been known (see, for example, Patent Document 1).

### RELATED-ART DOCUMENT

### Patent Document

Patent Document 1: Japanese Unexamined Patent Application Publication No. 2015-93813

### SUMMARY OF THE INVENTION

### PROBLEMS TO BE SOLVED BY THE INVENTION

For sintering a conventional zirconia powder, a high temperature and a long time are needed, and the resultant sintered body includes many pores or voids.

The object of the present invention is to provide a slurry, which can be sintered at a low temperature in a short time, and can form a densified sintered body.

### MEANS FOR SOLVING THE PROBLEMS

A slurry of the present disclosure includes a zirconia powder, a glass powder, and a polymerizable monomer.

### EFFECTS OF THE INVENTION

According to the present disclosure, there can be provided a slurry, which can be sintered at a low temperature in a short time, and can form a densified sintered body.

### BRIEF DESCRIPTION OF THE DRAWINGS

[Fig. 1] Fig. 1 is a diagram depicting a SEM micrograph of a cross-section of a sintered body obtained from the slurry of the present embodiment.
[Fig. 2] Fig. 2 is a diagram depicting a SEM micrograph of a cross-section of a sintered body obtained from the slurry of the comparative example.

### DETAILED DESCRIPTION OF THE INVENTION

Next, embodiments for carrying out the present invention will be described.

### <Slurry>

The slurry of the present embodiment includes a zirconia powder, a glass powder, and a polymerizable monomer.

The zirconia powder is particles or a powder of zirconia (ZrO₂).

Zirconia (ZrO₂) has a monoclinic crystal system at room temperature, but the crystal structure of zirconia transitions to tetragonal and cubic phases as the temperature increases. Since this phase transition is accompanied by a volume change, the sintered body is destroyed by repeating the rise and fall of temperature. Therefore, it is preferable to use partially-stabilized zirconia, in which a rare earth oxide or the like is dissolved as a stabilizer in zirconia to form oxygen vacancies in the crystal structure, thereby inhibiting the destruction due to the rise and fall of temperature.

Examples of such a stabilizer include yttria (Y₂O₃), scandia (Sc₂O₃), calcia (CaO), magnesia (MgO), ceria (CeO₂), praseodymia (Pr₂O₃), neodymia (Nd₂O₃), thoria (ThO₂), urania (UO₂), titania (TiO₂), manganese oxide (MnO₂), strontia (SrO), baria (BaO), nickel oxide (NiO), cobalt oxide (Co₂O₄), chromium oxide (Cr₂O₃ or CrO₃), and the like. Among the above stabilizers, yttria (Y₂O₃) is preferable as a stabilizer.

The amount of the stabilizer is not particularly limited, but is preferably 1 mol% or greater and 8 mol% or less, preferably 1.5 mol% or greater and 6 mol% or less, and more preferably 2 mol% or greater and 5 mol% or less in the zirconia powder. When the stabilizer in the amount of 1 mol% or greater and 8 mol% or less is included in the zirconia powder, the resultant zirconia sintered body includes only tetragonal zirconia particles, and has excellent toughness due to stress-induced phase transition.

The particle size of the zirconia powder is not particularly limited, but is preferably 0.01 µm or greater and 1.0 µm or less, more preferably 0.1 µm or greater and 0.9 µm or less, and further preferably 0.2 µm or greater and 0.7 µm or less. Here, the particle size refers to an average particle size defined by a median diameter (d50). When the particle size of the zirconia powder is 0.01 µm or greater and 1.0 µm or less, the zirconia powder is readily dispersed in a slurry, thereby obtaining a homogeneous slurry.

The glass powder is particles or a powder of glass.

A type of the glass is not particularly limited. Examples of the glass include lithium silicate glass, lithium disilicate glass, lithium metasilicate glass, strontium glass, strontium boroaluminosilicate glass, strontium fluoroaluminosilicate glass, barium glass, barium boroaluminosilicate glass, barium fluoroaluminosilicate glass, lanthanum glass, lanthanum boroaluminosilicate glass, lanthanum fluoroaluminosilicate glass, zinc silicate glass, zinc borosilicate glass, zinc fluorosilicate glass, zincborate glass, potassium feldspar glass, soda feldspar glass, aluminum fluoride-zirconium fluoride glass, zirconium fluoride (ZBLAN: ZrF₄-BaF₂-LaF₃-AlF₃-NaF) glass, and the like. The above glass may be used alone or in combination of two or more. Among the above, lithium disilicate glass, barium glass, and zinc fluorosilicate glass are preferable.

The particle size of the glass powder is not particularly limited, but is preferably 0.01 µm or greater and 1.0 µm or less, more preferably 0.1 µm or greater and 0.9 µm or less, and further preferably 0.2 µm or greater and 0.7 µm or less. When the particle size of the glass powder is 0.01 µm or greater and 1.0 µm or less, the glass powder is readily dispersed in a slurry, thereby obtaining a homogeneous slurry.

The amount of the glass powder is not particularly limited, but is preferably 0.01 percent by mass or greater and 5 percent by mass or less, more preferably 0.05 percent by mass or greater and 3 percent by mass or less, and further preferably 0.08 percent by mass or greater and 1 percent by mass or less in the slurry. When the glass powder in the amount of 0.01 percent by mass or greater and 5 percent by mass or less is included in the slurry, densification of the sintered body can be efficiently advanced during sintering of the slurry.

The glass powder preferably further includes silicon dioxide (SiO₂). The silicon dioxide may be present as a glass compound in the glass powder, or may be present as a solid solution of the glass.

The amount of the silicon dioxide is not particularly limited, but is preferably 10 percent by mass or greater and 85 percent by mass or less, more preferably 15 percent by mass or greater and 80 percent by mass or less, and further preferably 20 percent by mass or greater and 75 percent by mass or less in the glass powder. When the glass powder, which includes the silicon dioxide in the amount of 10 percent by mass or greater and 85 percent by mass or less, is included in the slurry, densification of the sintered body can be facilitated during sintering of the slurry.

The polymerizable monomer is a compound that is polymerized and cured by heat or light.

The polymerizable monomer is not particularly limited. For example, various polymerizable monomers applied in the dental field can be used as the polymerizable monomer. Among such polymerizable monomers, a radically polymerizable monomer can be used. The polymerizable monomer may have one functional group, or may have two or more functional groups.

A specific substance of the polymerizable monomer is not particularly limited. Examples of the polymerizable monomer include: esters of α-cyanoacrylic acid, (meth)acrylic acid, α-haloacrylic acid, crotonic acid, cinnamic acid, sorbic acid, maleic acid, itaconic acid, and the like; (meth)acrylamide; (meth)acrylamide derivatives; vinyl esters; vinyl ethers; mono-N-vinyl derivatives; styrene derivatives; and the like. The above polymerizable monomers may be used alone or in combination of two or more. Among the above polymerizable monomers, a (meth)acrylic acid ester and a (meth)acrylamide derivative can be used, and a (meth)acrylic acid ester is preferably used.

Here, the (meth)acrylic ester refers to an acrylic ester (may be referred to as acrylate hereinafter) or a methacrylic acid ester (may be referred to as methacrylate hereinafter). In addition, the (meth)acrylamide refers to acrylamide or methacrylamide.

Examples of the monofunctional (meth)acrylic acid ester include methyl (meth)acrylate, isobutyl (meth)acrylate, benzyl (meth)acrylate, lauryl (meth)acrylate, 2,3-dibromopropyl (meth)acrylate, 2-hydroxyethyl (meth)acrylate, 6-hydroxyhexyl (meth)acrylate, 10-hydroxydecyl (meth)acrylate, propylene glycol mono(meth)acrylate, glycerin mono(meth)acrylate, erythritol mono(meth)acrylate, and the like.

Examples of the monofunctional (meth)acrylamide derivative include N-methylol (meth)acrylamide, N-hydroxyethyl(meth)acrylamide, N-(dihydroxyethyl)(meth)acrylamide, (meth)acryloyloxydodecylpyridinium bromide, (meth)acryloyloxydodecylpyridinium chloride, (meth)acryloyloxy hexadecylpyridinium chloride, (meth)acryloyloxy decylammonium chloride, and the like.

Examples of the bifunctional (meth)acrylic acid ester include ethylene glycol di(meth)acrylate, triethylene glycol di(meth)acrylate, propylene glycol di(meth)acrylate, neopentyl glycol di(meth)acrylate, 1,6-hexanediol di(meth)acrylate, 1,10-decanediol di(meth)acrylate, 2,2-bis[4-[3-(meth)acryloyloxy-2-hydroxypropoxy]phenyl]propane, 2,2-bis[4-(2-(meth)acryloyloxyethoxy)phenyl]propane, 2,2-bis[4-(meth)acryloyloxy polyethoxyphenyl]propane, 1,2-bis[3-(meth)acryloyloxy-2-hydroxypropoxy]ethane, pentaerythritol di(meth)acrylate, [2,2,4-trimethylhexamethylene bis(2-carbamoyloxyethyl)] di(meth)acrylate, ethoxylated bisphenol A di(meth)acrylate, and the like.

Examples of the trifunctional or higher (meth)acrylic acid ester include trimethylolpropane tri(meth)acrylate, trimethylolethane tri(meth)acrylate, tetrametylolmethane tri(meth)acrylate, pentaerythritol tetra(meth)acrylate, dipentaerythritol hexa(meth)acrylate, N,N'-(2,2,4-trimethylhexamethylene) bis[2-(aminocarboxy)propane-1,3-diol] tetramethacrylate, 1,7-diacryloyloxy-2,2,6,6-tetraacryloyloxymethyl-4-oxyheptane, and the like.

Among the above, the (meth)acrylic acid ester is preferably a bifunctional (meth)acrylic acid ester, more preferably neopentyl glycol di(meth)acrylate or ethoxylated bisphenol A di(meth)acrylate, and further preferably neopentyl glycol diacrylate or ethoxylated bisphenol A diacrylate.

The amount of the polymerizable monomer is not particularly limited, but is preferably 2 percent by mass or greater and 40 percent by mass or less, more preferably 5 percent by mass or greater and 30 percent by mass or less, and further preferably 10 percent by mass or greater and 20 percent by mass or less in the slurry. When the amount of the polymerizable monomer is 2 percent by mass or greater and 40 percent by mass, the kneadability of the slurry improves, and high mechanical strength can be imparted to the sintered body obtained by sintering or firing the slurry.

The slurry of the present disclosure may further include other components, as long as the object of the present invention is not impaired. Examples of the other components included in the slurry include a polymerization initiator, a polymerization inhibitor, a plasticizer, a dispersant, a filler (excluding the zirconia powder and the glass powder), a colorant, a fluorescent agent, and the like.

Examples of the polymerization initiator include a chemical polymerization initiator and a photopolymerization initiator.

The chemical polymerization initiator is not particularly limited. For example, a thiourea derivative, a vanadium compound, a tertiary amine, or an organic peroxide can be used.

Among the chemical polymerization initiators, the thiourea derivative functions as a reducing agent.

The thiourea derivative is not particularly limited. Examples of the thiourea derivative include ethylene thiourea, N-methylthiourea, N-ethylthiourea, N-propylthiourea, N-butylthiourea, N-laurylthiourea, N-phenylthiourea, N-cyclohexylthiourea, N,N-dimethylthiourea, N,N-diethylthiourea, N,N-dipropylthiourea, N,N-dibutylthiourea, N,N-dilaurylthiourea, N,N-diphenylthiourea, N,N-dicyclohexylthiourea, trimethylthiourea, tetramethylthiourea, N-acetylthiourea, N-benzoylthiourea, 1-allyl-3-(2-hydroxyethyl)-2-thiourea, 1-(2-tetrahydrofurfuryl)-2-thiourea, N-tert-butyl-N'-isopropylthiourea, 2-pyridylthiourea, and the like. Among the above, N-benzoylthiourea is preferable in view of improvement of curability of the slurry.

Among the chemical polymerization initiators, the vanadium compound functions as a reducing agent.

The vanadium compound is not particularly limited. Examples of the vanadium compound include oxovanadium oxalate, vanadyl acetylacetonate, vanadium acetylacetonate, vanadyl stearate, vanadium naphthenate, vanadium benzoylacetonate, and the like. Among the above, vanadyl acetylacetonate is preferable in view of improvement of curability of the slurry.

Among the chemical polymerization initiators, the tertiary amine functions as a reducing agent. The tertiary amine is not particularly limited. Examples of the tertiary amine include a tertiary aliphatic amine and a tertiary aromatic amine.

Examples of the tertiary aliphatic amine include N,N-dimethylaminoethylmethcrylate, triethanolamine, and the like.

Examples of the tertiary aromatic amine include alkyl p-dialkylaminobenzoate, 7-dimethylamino-4-methylcoumarin, N,N-dimethylaniline, N,N-dibenzylaniline, N,N-dimethyl-p-toluidine, N,N-diethyl-p-toluidine, N,N-bis(2-hydroxyethyl)-p-toluidine, N,N,2,4,6-pentamethylaniline, N,N,2,4-tetramethylaniline, N,N-diethyl-2,4,6-trimethylaniline, and the like. Among the above, the tertiary amine is preferably a tertiary aromatic amine, and more preferably alkyl p-dialkylaminobenzoate.

Examples of the alkyl p-dialkylaminobenzoate include methyl p-dimethylaminobenzoate, ethyl p-dimethylaminobenzoate, propyl p-dimethylaminobenzoate, amyl p-dimethylaminobenzoate, isoamyl p-dimethylaminobenzoate, ethyl p-diethylaminobenzoate, propyl p-diethylaminobenzoate, and the like.

Among the chemical polymerization initiators, the organic peroxide functions as an oxidizing agent.

Examples of the organic peroxide include benzoyl peroxide, cumene hydroperoxide, t-butyl hydroperoxide, t-amyl hydroperoxide, 1,1,3,3-tetramethylbutyl hydroperoxide, 2,5-dimethyl-2,5-di(hydroperoxy)hexane, p-diisopropylbenzene monohydroperoxide, p-methane hydroperoxide, pinane hydroperoxide, and the like. Among the above, cumene hydroperoxide is preferably in view of improvement of curability of the slurry.

The photopolymerization initiator is not particularly limited. Examples of the photopolymerization initiator include camphorquinone, diphenyl(2,4,6-trimethylbenzoyl)phosphine oxide, 2,4,6-trimethylbenzoyldiphenylphosphine oxide, benzyl ketal, diacetyl ketal, benzyldimethyl ketal, benzyldiethyl ketal, benzylbis(2-methoxyethyl)ketal, 4,4'-dimethyl(benzyldimethylketal), anthraquinone, 1-chloroanthraquinone, 2-chloroanthraquinone, 1,2-benzanthraquinone, 1-hydroxyanthraquinone, 1-methylanthraquinone, 2-ethylanthraquinone, 1-bromoanthraquinone, thioxanthone, 2-isopropylthioxanthone, 2-nitrothioxanthone, 2-methylthioxanthone, 2,4-dimethylthioxanthone, 2,4-diethylthioxanthone, 2,4-diisopropylthioxanthone, 2-chloro-7-trifluoromethylthioxanthone, thioxanthone-10,10-dioxide, thioxanthone-10-oxide, benzoin methyl ether, benzoin ethyl ether, benzoin isopropyl ether, benzoin isobutyl ether, benzophenone, bis(4-dimethylaminophenyl)ketone, 4,4'-bis(diethylamino)benzophenone, and the like. Among the above, camphorquinone and diphenyl(2,4,6-trimethylbenzoyl)phosphine oxide are preferable in view of improvement curability of the molded body of the slurry.

The above polymerization initiators may be used alone or in combination of two or more.

The amount of the polymerization initiator in the slurry is not particularly limited. The amount of the polymerization initiator is, for example, 0.001 percent by mass or greater and 10 percent by mass or less, preferably 0.005 percent by mass or greater and 1 percent by mass or less, and further preferably 0.01 percent by mass or greater and 0.1 percent by mass or less. When the amount of the polymerization initiator in the slurry is 0.001 percent by mass or greater, curability of the slurry is further improved. When the amount of the polymerization initiator in the slurry is 10 percent by mass or less, storage stability of the slurry improves, and polymerization efficiency at the time of curing of the slurry is improved.

Examples of the polymerization inhibitor include dibutylhydroxytoluene (2,6-di-tert-butyl-p-cresol), 6-tert-butyl-2,4-xylenol, hydroquinone, 4-methoxyphenol, 4-tert-butylpyrocatechol, tert-butylhydroquinone, and the like. The above polymerization inhibitors may be used alone or in combination of two or more. Among the above polymerization inhibitors, dibutylhydroxytoluene is preferable in view of improvement of curability of the slurry.

The amount of the polymerization inhibitor in the slurry is not particularly limited. When the polymerization inhibitor is included in the slurry, the amount of the polymerization inhibitor is 0.0005 percent by mass or greater and 5 percent by mass or less, preferably 0.001 percent by mass or greater and 1 percent by mass or less, and more preferably 0.005 percent by mass or greater and 0.1 percent by mass or less. When the amount of the polymerization inhibitor in the slurry is 0.0005 percent by mass or greater and 5 percent by mass or less, storage stability of the slurry is improved.

Examples of the plasticizer include polyethylene glycol, glycerin, propylene glycol, polypropylene glycol, dimethyl phthalate, diethyl phthalate, di-2-ethylhexyl phthalate, dibutyl phthalate, and the like.

Among the above, the plasticizer is preferably polypropylene glycol. The average molecular weight of the polypropylene glycol is preferably 200 or greater and 600 or less, more preferably 300 or greater and 500 or less, and further preferably 380 to 420.

Examples of the dispersant include polyacrylic acid, sodium polyacrylate, ammonium polyacrylate, formalin-condensed naphthalenesulfonic acid, partially alkyl-esterified polycarboxylic acid, polyether, polyalkylene polyamine, sodium polyphosphate, polycarboxylic acid alkyl amine salts, straight-chain alkylbenzene sulfonate, methyl α-sulfofatty acid ester salts, α-olefin sulfonate, dialkyl sulfosuccinate, alkyl sulfate ester salts, polyoxyethylene alkyl acid ester salts, commercially available dispersants, such as Disperbyk-110, Disperbyk-162, and Disperbyk-180 (all are wetting and dispersing agents manufactured by BYK Chemie GmbH, "Disperbyk" is a registered trademark), and the like.

Examples of the filler include inorganic fillers excluding the zirconia powder and the glass powder, organic-inorganic composite fillers, cluster fillers, and the like. The filler may be subjected to a hydrophobic treatment. For the hydrophobic treatment of the filler, for example, a silane-coupling agent, such as γ-methacryloyloxypropyltrimethoxysilane or the like, can be used.

Examples of the colorant include ZrSiO₄-Fe₂O₃, ZrSiO₄-V₂O₅, ZrSiO₄-NiO-CoO, CoO-ZnO-Al₂O₃, MnO-SiO₂-Al₂O₃, NiO, CoO, iron oxide, neodymium oxide, erbium oxide, praseodymium oxide, titanium oxide, alumina, silica, and the like.

Examples of the fluorescent agent include europium oxide, gallium oxide, gadolinium oxide, neodymium oxide, thulium oxide, bismuth oxide, and the like.

### <Production method of slurry>

The production method of the slurry is not particularly limited. For example, the zirconia powder, the glass powder, and the polymerizable monomer are mixed and homogeneously dispersed, thereby obtaining the slurry of the present disclosure.

### <Molded body>

The molded body of the present disclosure is obtained using the slurry of the present disclosure. The formation method of the molded body is not particularly limited. For example, a method of placing and solidifying the slurry in a mold (e.g., slip casting and gel casting) or additive manufacturing (e.g., active manufacturing and 3D printing) can be used. Among the above, 3D printing capable of precise molding is preferably used.

In the 3D printing, a known 3D printer can be used. Examples of a system of the 3D printer include a stereolithography (SLA) system, a digital light processing (DLP) system, and the like, but the DLP system is preferable. Examples of a commercially available product of the 3D printer of the DLP system include MAX UV (manufactured by Asiga) and the like.

Examples of a method of laminating in the 3D printing include: a method of applying light from a top surface of a container in which the laminated molded body is accommodated (a top-down method), a method of applying light from a bottom surface (a bottom-up method), and the like. Among the above methods, the bottom-up method is preferable.

In the case where a molded body is produced by the bottom-up method, the bottom surface of the container has light transmittance, and light emitted from the bottom side of the container passes through the bottom surface of the container to be applied to the molded body. Examples of the light to be applied include ultraviolet rays having a wavelength of 380 to 450 nm, visible light, and the like. Examples of a light source of the liquid to be applied include LED lasers, LED lamps, LED projectors, and the like.

The production method of the molded body may further include a step of washing the molded body, a step of performing post-polymerization of the molded body, and the like.

### <Sintered body>

The sintered body of the present disclosure can be obtained by sintering or firing the molded body of the present disclosure. The sintering conditions of the sintered body are not particularly limited. The heating temperature at the time of sintering is, for example, 700°C or higher and 2,500°C or lower, preferably 900°C or higher and 2,000°C or lower, and more preferably 1,100°C or higher and 1,700°C or lower. By setting the heating temperature at the time of sintering to 700°C or higher and 2,500°C or lower, a sintered body, which has been sufficiently degreased and sintered, can be obtained.

The heating temperature at the time of sintering may be increased stepwise. For example, the molded body may be sintered while increasing the temperature from 1,000°C to 1,500°C at a rate of 100°C/min. In the case where the heating temperature is increased at the time of sintering, each temperature may be held, or may not be held.

The heating time for sintering is not particularly limited. The heating time for sintering is, for example, 10 seconds or longer and 2 hours or shorter, preferably 30 seconds or longer and 1 hour or shorter, and more preferably 1 minute or longer and 30 minutes or shorter. When the heating time for sintering is 10 seconds or longer and 2 hours or shorter, a sintered body, which has been sufficiently degreased and sintered, can be obtained.

Since the slurry of the present disclosure includes the zirconia powder, the glass powder, and the polymerizable monomer as described above, the slurry, in which the zirconia powder and the glass powder are homogeneously mixed, can be molded and hardened. In addition, the resultant molded body can be sintered by liquid phase sintering. Thus, the slurry of the present disclosure can be sintered at a low temperature in a short time. In addition, a densified sintered body is obtained by sintering the slurry of the present disclosure.

In the slurry of the present disclosure, the glass powder becomes a liquid phase during sintering, as described above, and therefore the slurry can be sintered at a lower temperature in a shorter time. Since wettability of zirconia to the glass, which becomes a liquid phase during sintering, is improved and the molded body is easily shrunk by the capillary force, a more densified sintered body is obtained.

Since the molded body of the present disclosure is obtained using the slurry of the present disclosure as described above, the effects of the slurry of the present disclosure can be obtained.

Specifically, since the molded body of the present disclosure uses the slurry including the zirconia powder, the glass powder, and the polymerizable monomer, the molded body can be obtained by molding and hardening the slurry in which the zirconia powder and the glass powder are homogeneously mixed. In addition, the molded body of the present disclosure can be sintered by liquid phase sintering. Thus, the molded body of the present disclosure can be sintered at low temperature in a short time. In addition, a densified sintered body is obtained by sintering the molded body of the present disclosure, while maintaining the shape of the molded body.

Since the sintered body of the present disclosure can be obtained by further performing sintering of the molded body, which has been obtained using the slurry of the present disclosure, the effects of the slurry of the present disclosure can be obtained.

Specifically, since the sintered body of the present disclosure is obtained by further performing sintering of the molded body, which has been obtained using the slurry including the zirconia powder, the glass powder, and the polymerizable monomer, the molded body, which has been obtained by molding and hardening the slurry, in which the zirconia powder and the glass powder are homogeneously mixed, can be sintered by liquid phase sintering. Therefore, the sintered body of the present disclosure can be obtained by sintering at a low temperature in a short time. In addition, the sintered body of the present disclosure is densified while maintaining the shape of the molded body.

The sintered body of the present disclosure can be obtained by sintering the slurry of the present disclosure at a low temperature in a short period, and is densified, as described above. Therefore, the slurry of the present disclosure, which can form such a sintered body, can be used for various dental materials. Examples of such dental materials include dental prostheses, orthodontic appliances, dental surgical guides, dental implants, and the like.

### Examples

Examples of the present invention will be described hereinafter, but the present invention is not limited to the examples.

### <Preparation of glass powder>

Glass raw materials were sufficiently mixed and stirred using a motor or a nylon ball mill. The obtained mixture was placed in a platinum crucible, and the platinum crucible was set in an electric furnace. The electric furnace was heated up to 1,300°C to melt and sufficiently homogenize the mixture, followed by pouring the mixture into water to form a glass lump. The obtained glass lump was pulverized by a ball mill of alumina for 20 hours, and the resultant product was passed through a sieve with 120-mesh, thereby obtaining a glass powder. The glass powder was further subjected to wet pulverization for 50 to 70 hours using the ball mill of alumina, thereby obtaining a barium glass powder or a zinc fluorosilicate glass, which had the median diameter of 0.4 µm. The compositions of the obtained powders were confirmed. The zinc fluorosilicate glass powder included 26.4 percent by mass of zinc oxide, 6.5 percent by mass of fluorine, 24.7 percent by mass of silicon dioxide, 9.6 percent by mass of calcium oxide, and 32.5 percent by mass of lanthanum oxide. The barium glass included 45.0 percent by mass of silicon dioxide, 12.0 percent by mass of boron oxide, 8.9 percent by mass of aluminum oxide, 1.8 percent by mass of fluorine, and 32.3 percent by mass of barium oxide.

A lithium disilicate glass ceramic was prepared by, after obtaining as a glass lump, heating the glass lump at 650°C for 60 minutes, followed by heating at 850°C for 10 minutes. The composition of the lithium disilicate glass ceramic was confirmed, and included 69.8 percent by mass of silicon dioxide, 11.7 percent by mass of lithium oxide, 5.6 percent by mass of aluminum oxide, 5.6 percent by mass of diphosphorus pentoxide, 2.4 percent by mass of potassium oxide, 1.2 percent by mass of sodium oxide, 1.9 percent by mass of zirconium oxide, 1.4 percent by mass of strontium oxide, and 0.4 percent by mass of titanium oxide. The obtained glass ceramic was subjected to wet pulverization for 15 hours using a ball mill of alumina with zirconia media, thereby obtaining a glass ceramic powder. Then, the glass powder was further subjected to elutriation, thereby obtaining a lithium disilicate glass ceramic powder having the median diameter of 0.4 µm.

### <Preparation of slurry>

A zirconia powder including 3 mol% of yttria; neopentyl glycol diacrylate and ethoxylated bisphenol A diacrylate serving as photopolymerizable monomers; polypropylene 400 (polypropylene having the average molecular weight of approximately 400) serving as a plasticizer; and diphenyl(2,4,6-trimethylbenzoyl)phosphine oxide serving as a photopolymerization initiator were mixed by a planetary centrifugal mixer, thereby obtaining a homogeneous slurry. To the slurry, the above-described glass powder (the lithium disilicate glass ceramic powder, the barium glass powder, or the zinc fluorosilicate glass powder) in the amount of 0.2 percent by mass was added. The resultant mixture was mixed by a motor, thereby obtaining a homogeneously dispersed slurry. The obtained slurry in each of Examples and Comparative Examples is presented in Table 1 to Table 3.

### <Production of molded body>

The obtained slurry was formed into a thin film of 50 micrometers by a film applicator, such thin film was laminated while applying light, thereby producing a cured body having a thickness of 1.5 mm. The cured body was cut by a precision cutter to obtain a molded body having a length of 5 mm, a width of 5 mm, and a thickness of 1.5 mm.

### <Production of sintered body>

The obtained molded body was placed in a furnace, and was degreased and sintered, thereby obtaining a sintered body. The heating rate after the degreasing process was set to 100 °C/min, and the temperature was increased to 1,300°C (without holding), 1,400°C (without holding), 1,500°C (without holding), or 1,500°C with holding at 1,500°C for 2 hours, followed by cooling.

### <Relative density of sintered body>

The relative density of the obtained sintered body was measured by the Archimedes method. The relative density was determined from the actual measurement value of the sintered body determined by the Archimedes method, the density (6.09 g/cm³) of the zirconia including 3 mol% of yttria, the density of each of the sintering aides, which were 2.50 g/cm³ of lithium disilicate glass ceramic, 2.95 g/cm³ of barium glass, and 3.60 g/cm³ of zinc fluorosilicate glass. The relative density of each of the sintered bodies is presented in Table 1 to Table 3.

### <Fracture toughness value>

The fracture toughness value was measured using a Vickers hardness tester (FV-700, manufactured by FUTURE-TECH CORP.) according to the IF method described in JIS R1607 "Testing methods for fracture toughness of fine ceramics". The unit of the fracture toughness value is MPa·m^{1/2}. The fracture toughness value of each of the sintered bodies is presented in Table 1 to Table 3.

### <SEM observation of material structure>

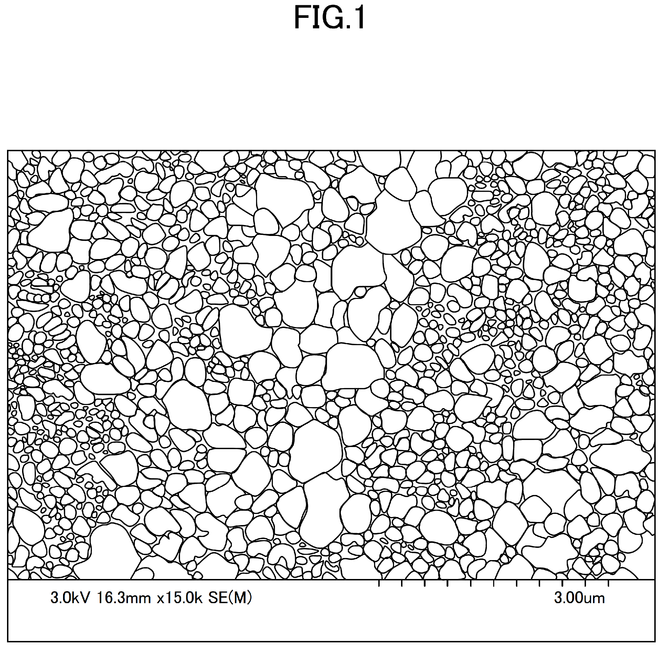

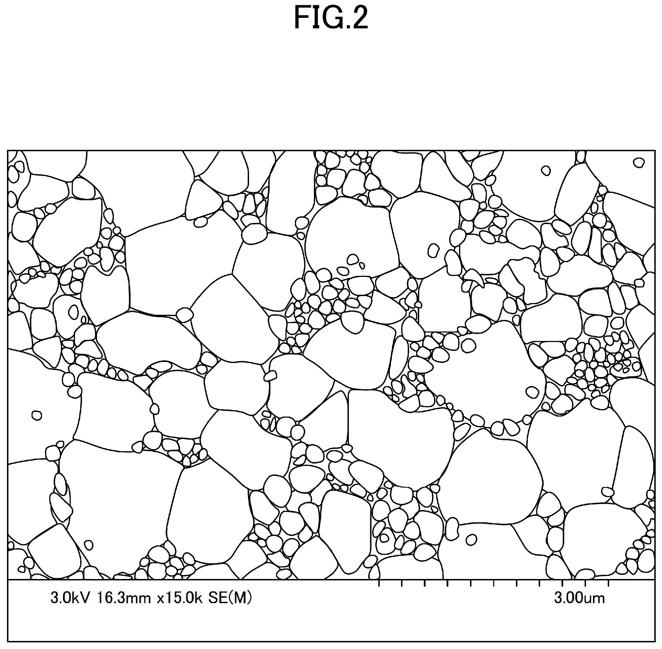

The obtained sintered body was polished using POLYMOND (final polishing grit: 1,000), and was subjected to thermal etching, followed by performing observation with a scanning electron microscope (SEM). As the SEM, a field emission scanning electron microscope (FE-SEM SU-70, manufactured by Hitachi, Ltd.) was used. Fig. 1 depicts a SEM micrograph of the cross-section of the sintered body of Example 19 serving as the sintered body obtained from the slurry of the present embodiment. Fig. 2 depicts a SEM micrograph of the cross-section of the sintered body of Comparative Example 4 serving as the sintered body of the comparative example.

**[Table 1]**

| Component/mass% | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Neopentyl glycol diacrylate | 2.5 | 2.5 | 2.5 | 2.5 | 2.5 | 2.5 | 2.5 | 2.5 | 2.5 |
| Ethoxylated bisphenol A diacrylate | 10 | 10 | 10 | 10 | 10 | 10 | 10 | 10 | 10 |
| Polypropylene glycol 400 | 1.37 | 1.37 | 1.37 | 1.37 | 1.37 | 1.37 | 1.37 | 1.37 | 1.37 |
| Dispersant | 4.1 | 4.1 | 4.1 | 4.1 | 4.1 | 4.1 | 4.1 | 4.1 | 4.1 |
| Dibutylhydroxytoluene | 0.01 | 0.01 | 0.01 | 0.01 | 0.01 | 0.01 | 0.01 | 0.01 | 0.01 |
| Diphenyl (2,4,6-trimethylbenzoyl) phosphine oxide | 0.02 | 0.02 | 0.02 | 0.02 | 0.02 | 0.02 | 0.02 | 0.02 | 0.02 |
| Zirconium oxide powder | 81.9 | 81.9 | 81.9 | 81.9 | 81.9 | 81.9 | 81.9 | 81.9 | 81.9 |
| Lithium disilicate glass ceramic | 0.1 | | | 0.1 | | | 0.1 | | |
| Barium glass | | 0.1 | | | 0.1 | | | 0.1 | |
| Zinc fluoroaluminosilicate glass | | | 0.1 | | | 0.1 | | | 0.1 |
| Total | 100 | 100 | 100 | 100 | 100 | 100 | 100 | 100 | 100 |
| Sintering condition | 1300°C | 1300°C | 1300°C | 1400°C | 1400°C | 1400°C | 1500°C | 1500°C | 1500°C |
| Relative density [%] | 52.4 | 52.1 | 53.7 | 73.2 | 73.2 | 76.2 | 86.8 | 87.2 | 89.7 |
| Fracture toughness value [MPa•m^{1/2}] | | | | | | | | | |

**[Table 2]**

| Component/mass% | Ex. 10 | Ex. 11 | Ex. 12 | Ex. 13 | Ex. 14 | Ex. 15 | Ex. 16 | Ex. 17 | Ex. 18 | Comp. Ex. 1 | Comp. Ex. 2 | Comp. Ex. 3 |
|---|---|---|---|---|---|---|---|---|---|---|---|---|
| Neopentyl glycol diacrylate | 2.5 | 2.5 | 2.5 | 2.5 | 2.5 | 2.5 | 2.5 | 2.5 | 2.5 | 2.5 | 2.5 | 2.5 |
| Ethoxylated bisphenol A diacrylate | 10 | 10 | 10 | 10 | 10 | 10 | 10 | 10 | 10 | 10 | 10 | 10 |
| Polypropylene glycol 400 | 1.37 | 1.37 | 1.37 | 1.37 | 1.37 | 1.37 | 1.37 | 1.37 | 1.37 | 1.37 | 1.37 | 1.37 |
| Dispersant | 4.1 | 4.1 | 4.1 | 4.1 | 4.1 | 4.1 | 4.1 | 4.1 | 4.1 | 4.1 | 4. 1 | 4.1 |
| Dibutylhydroxytoluene | 0.01 | 0.01 | 0.01 | 0.01 | 0.01 | 0.01 | 0.01 | 0.01 | 0.01 | 0.01 | 0.01 | 0.01 |
| Diphenyl(2.4,6-trimethylbenzoyl)phosphine oxide | 0.02 | 0.02 | 0.02 | 0.02 | 0.02 | 0.02 | 0.02 | 0.02 | 0.02 | 0.02 | 0.02 | 0.02 |
| Zirconium oxide powder | 81.8 | 81.8 | 81.8 | 81.8 | 81.8 | 81.8 | 81.8 | 81.8 | 81.8 | 82 | 82 | 82 |
| Lithium disilicate glass ceramic | 0.2 | | | 0.2 | | | 0.2 | | | | | |
| Barium glass | | 0.2 | | | 0.2 | | | 0.2 | | | | |
| Zinc fluoroaluminosilicate glass | | | 0.2 | | | 0.2 | | | 0.2 | | | |
| Total | 100 | 100 | 100 | 100 | 100 | 100 | 100 | 100 | 100 | 100 | 100 | 100 |
| Sintering condition | 1300°C | 1300°C | 1300°C | 1400°C | 1400°C | 1400°C | 1500°C | 1500°C | 1500°C | 1300°C | 1400°C | 1500°C |
| Relative density [%] | 52.4 | 53 | 54 | 76.1 | 73.6 | 78.8 | 98.3 | 96.1 | 98.6 | 51.7 | 71 | 94.7 |
| Fracture toughness value [MPa·m^{1/2}] | | | | | | | 6.3 | 6.9 | 6.8 | | | |

**[Table 3]**

| Component/mass% | Ex. 19 | Ex. 20 | Ex. 21 | Comp. Ex. 4 |
|---|---|---|---|---|
| Neopentyl glycol diacrylate | 2.5 | 2.5 | 2.5 | 2.5 |
| Ethoxylated bisphenol A diacrylate | 10 | 10 | 10 | 10 |
| Polypropylene glycol 400 | 1.37 | 1.37 | 1.37 | 1.37 |
| Dispersant | 4.1 | 4.1 | 4.1 | 4.1 |
| Dibutylhydroxytoluene | 0.01 | 0.01 | 0.01 | 0.01 |
| Diphenyl(2,4,6-trimethylbenzoyl) phosphine oxide | 0.02 | 0.02 | 0.02 | 0.02 |
| Zirconium oxide powder | 81.8 | 81.8 | 81.8 | 82 |
| Lithium disilicate glass ceramic | 0.2 | | | |
| Barium glass | | 0.2 | | |
| Zinc fluoroaluminosilicate glass | | | 0.2 | |
| Total | 100 | 100 | 100 | 100 |
| Sintering condition | 1500°C, held for 2 h | 1500°C, held for 2 h | 1500°C, held for 2 h | 1500°C, held for 2 h |
| Relative density [%] | 98.9 | 98.7 | 98.7 | 98.9 |
| Fracture toughness value [MPa·m^{1/2}] | | | | 6.6 |

As presented in Table 1 to Table 3, the relative density of the sintered body obtained from the slurry of each of Examples 1 to 21 was high compared to that of the sintered body obtained from the corresponding slurry of each of Comparative Examples 1 to 3. In addition, from the results of the SEM observation depicted in Fig. 1 and Fig. 2, the sintered body of Example 19 was denser than the sintered body of Comparative Example 4. It was found from these results that the slurry further including the glass powder in addition to the zirconia powder and the polymerizable monomer could form a densified sintered body.

In addition, the relative density of the sintered body obtained from the slurry of each of Examples 3, 6, 9, 12, 15, and 18 was high compared to that of the sintered body obtained from the slurry of each of Examples 2, 5, 8, 11, 14, and 17. It was found from these results that the slurry including the zinc fluorosilicate glass powder having a low melting point serving as the glass powder had a higher effect of facilitating densification of a resultant sintered body compared to the slurry including the barium glass powder having a high melting point serving as the glass powder.

In addition, according to Table 2 and Table 3, the sintered body of each of Examples 16 to 18, in which isothermal holding was not performed had the relative density comparable to that of the sintered body of Comparative Example 4, in which the isothermal holding retention was performed. It was found from these results that the slurry further including the glass powder in addition to the zirconia powder and the polymerizable monomer could shorten the sintering time at the same sintering temperature.

Further, the sintered body of each of Examples 16 to 18, in which isothermal holding retention was not performed had the relative density comparable to that of the sintered body of each of Examples 19 to 21, in which the isothermal holding was performed. It was found from these results that the slurry including the zirconia powder, the glass powder, and the polymerizable monomer could form a densified sintered body without performing isothermal holding during sintering.

Further, the fracture toughness value of the sintered body of each of Examples 16 to 18 was comparable to that of the sintered body of Comparative Example 4. It was found from these results that the slurry including the zirconia powder, the glass powder, and the polymerizable monomer could form a sintered body that was dense and had high mechanical strength even when the sintering time was shortened.

The embodiments disclosed above will be added as follows.
<1> A slurry including a zirconia powder, a glass powder, and a polymerizable monomer.
<2> The slurry according to <1>, wherein the glass powder includes silicon dioxide.
<3> The slurry according to <1> or <2>, wherein the slurry is for dental use.
<4> A molded body, obtained using the slurry of any one of <1> to <3>.
<5> A sintered body, obtained by sintering the molded body of <4>.

Although the embodiments of the present invention have been described above, the present invention is not limited to the specific embodiments, and various modifications and changes can be made within the scope of the invention described in the claims.

The present application claims priority based on Japanese Patent Application No. 2023-213435 filed on December 19, 2023, the entire contents of which are incorporated herein by reference.

## Claims

1. A slurry comprising:
a zirconia powder;
a glass powder; and
a polymerizable monomer.

2. The slurry according to claim 1,
wherein the glass powder includes silicon dioxide.

3. The slurry according to claim 1,
wherein the slurry is for dental use.

4. A molded body, obtained using the slurry of any one of claims 1 to 3.

5. A sintered body, obtained by sintering the molded body of claim 4.
